# EUROPEAN PATENT SPECIFICATION

(11) **EP 0 361 576 B1**
(45) Date of publication and mention of the grant of the patent: **14.04.1993**
(21) Application number: 89202256.7
(22) Date of filing: 07.09.1989
(51) Int. Cl.: A22C 21/00

(54) **Apparatus for removing the broken neck vertebrae of a plucked ,decapitated bird**
Vorrichtung zur Entfernung der gebrochenen Halswirbel von gerupftem, geköpften Geflügel
Dispositif pour enlever les vertèbres cervicales rompues de volailles plumées et décapitées

(30) Priority: 16.09.1988 NL 8802290
(43) Date of publication of application: 04.04.1990
(73) Proprietor: MEYN MACHINEFABRIEK B.V., NL-1511 AE Oostzaan (NL)
(72) Inventor: Meyn, Cornelis, NL-1511 AS Oostzaan (NL)
(74) Representative: de Vries, Johannes Hendrik Fokke

(56) References cited:
- NL-A- 7 316 489
- NL-A- 7 502 569
- NL-A- 7 904 602
- US-A- 3 499 184
- US-A- 4 091 503

## Description

The invention relates to an apparatus according to the preamble of claim 1

An apparatus of this kind is known from NL-A-73.16489. In thid known apparatus the opening for receiving the neck of the bird is shaped as a fork, the innermost edge of which cooperates with the rod section, that extends very slightly spirally inwards relative to the direction of travel.

It is an object of the invention to provide an improved apparatus of the type mentioned before.

As a result the apparatus according to the invention is characterized by the characterizing features of claim 1.

For separating the broken off neck vertebrae from the remaining spine section the apparatus according to the invention basically comprises only two operative parts, namely the opening moving along with the conveyor for receiving the neck of the bird and the stationary pressure means with a rod section. The combined action of both parts is sufficient for effectively removing the neck. The neck of the bird to be processed is positioned in the opening when the pressure means is still at some distance from the rear edge of the receiving opening. Only after the pressure means has reached (intersects) the rear edge of this opening the combined action of these parts occurs and the neck vertebrae are removed automatically. The foregoing means that the relative motion between the pressure means and the receiving opening occurs continuously and that both parts do not have to carry out complicated relative motions.

The guide provides for a correct positioning of the neck of the bird to be processed in the receiving opening. Because the pressure means joins this guide this positioning changes steplessly in removing the neck when the rear edge of the receiving opening reaches the rod section.

According to a handy embodiment of the apparatus according to the invention the openings comprise V-shaped recesses at the circumference of a rotating plate of which the circumferential velocity substantially corresponds with the conveying velocity of the conveyor.

As a result the continuous relative motion between the receiving openings and the pressure means is realized in a simple way. The conveyor can follow a track that partially corresponds with the circumferential track of the rotating plate. However it is possible too that the conveyor follows a linear track that substantially is tangent to the circumference of the rotating plate at the location of the stationary pressure means.

Hereafter the invention will be elucidated by means of the drawing in which an embodiment of the apparatus according to the invention is illustrated.
Fig. 1 shows a perspective view and partially schematically an embodiment of the apparatus according to the invention, and
fig. 2 and 3 show schematically the operative principle of the apparatus according to fig. 1.

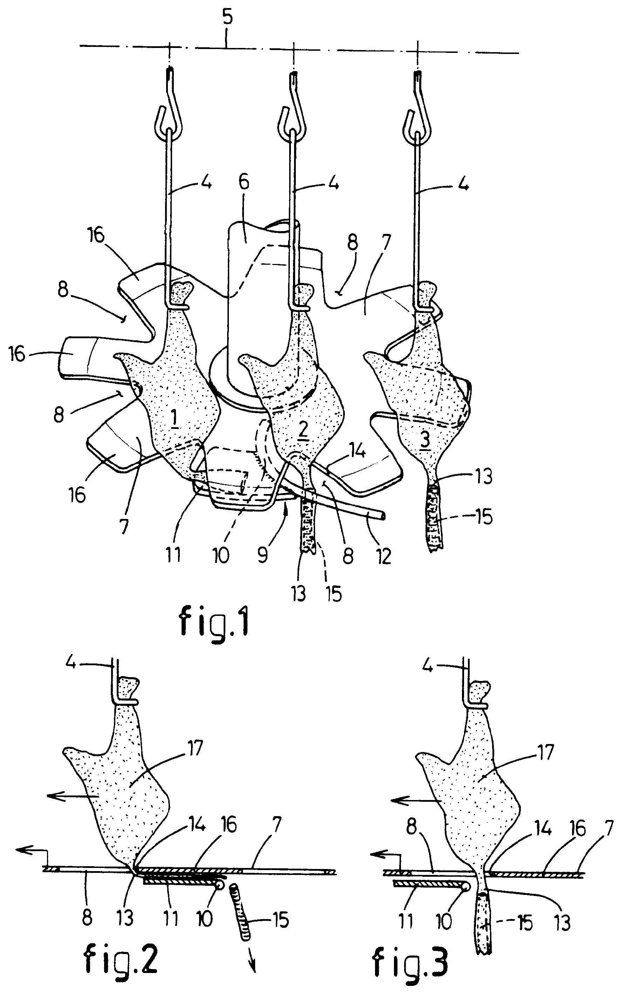

Fig. 1 shows a number of plucked, decapitated birds 1, 2 and 3 that all are hanging with their legs from a shackle 4 of a conveyor 5, that is only schematically indicated by a dotted line.

Below the conveyor 5 a plate 7 is positioned that rotates around a vertical shaft 6. At its circumference this plate 7 comprises a number of V-shaped recesses 8 that define receiving openings for receiving the neck of the birds to be processed.

The relative position of the conveyor 5 and the plate 7 is such that the track followed by the birds is substantially tangent to the circumference of the plate 7. However of course an embodiment can be imagined in which the conveyor 5 follows part of a circular track which corresponds with a section of the circumference of the plate 7 in stead of the linear track illustrated in fig. 1. Such a partially circular track of the conveyor 5 is known per se from several processing devices for processing birds.

Below the rotating plate 7 a stationary pressure means 9 is provided comprising a rod section 10 that mainly extends radially with respect to the plate 7, said rod section being connected to a stationary plate 11 that extends in parallel with the rotating plate 7. The upperside of this rod section 10 and the upperside of the stationary plate 11 are positioned in substantially the same plane (as is clearly visible in figs. 2 and 3).

A guide 12 of which an outer end is positioned outside of the circumference of the rotating plate 7 joins said rod section 10. This guide 12 intersects the track followed by the birds 1, 2 and 3 and guides the neck of these birds into the recesses 8 of the rotating plate 7.

At approaching the rotating plate 7 the downwards hanging neck 13 of the birds 1, 2 and 3 reaches the guide 12. The synchronisation between the conveyor 5 and the rotating plate 7 is such that this neck 13 is guided into a recess of the rotating plate 7 by means of the guide 12. It is noted here that the conveying velocity of the conveyor substantially corresponds with the circumferential velocity of the rotating plate 7.

Because the rotating plate 7 rotates relative to the rod section 10 of the stationary pressure means 9 the rear edge 14 of the recess 8 that just has received a neck 13 at a certain moment will pass above the rod section 10. Further care has been taken that the minimal distance occurring between this rear edge 14 of the recess 8 and the rod section 10 of the pressure means 9 is only just sufficient for letting pass the neck skin of the respective bird. The neck vertebrae 15 present in the neck skin are too big for passing between said rear edge 14 and the rod section 10 such that the neck vertebrae are removed from the neck skin as a result of the combined action of both parts. In fig. 1 the neck vertebrae 15 of bird 1 have already been removed from the neck 13.

Of course the rod section 10 as well as the rear edge 14 of the recesses 8 are slightly rounded such that the neck vertebrae can be removed without damaging the neck skin. Further it is noted that the neck vertebrae have already been loosened from the remaining spine section of the bird by a previous breaking operation.

Further it is visible in fig. 1 that the rotating plate 7 is slightly bent down at its circumferential sections 16 positioned between the recesses 8. As a result the combined action of the rear edge of the recesses 8 and the rod section 10 of the pressure means 9 is further enhanced.

In fig. 2 and fig. 3 the combined action of the rear edge 14 and the rod section 10 is again schematically indicated. In fig. 3 the neck 13 and the neck vertebrae 15 of a bird 17 positioned therein are received in a recess 8 of the rotating plate 7. The rod section 10 is still at some distance from the rear edge 14 of the recess 8. In fig. 2 the situation is shown in which the rear edge 14 has already passed the rod section 10 and in which the neck vertebrae 15 have been removed from the neck 13 of the bird. The distance between the rod section 10 and the rotating plate 7 is such that the neck 13 can pass therethrough, however the neck vertebrae 15 cannot do so and therefore will be removed from the neck 13.

The invention is not limited to the embodiment described before but can be varied widely, as described in the claims.

## Claims

1. Apparatus for removing the broken off neck vertebrae of a plucked, decapitated bird hanging with its legs from a shackle (4) of a conveyor (5), comprising at least one opening (8) for receiving the neck of the bird, said opening moving along with the conveyor, and a pressure means (9) comprising a rod section (10) moving relative to the receiving opening when the conveyor moves along for separating the broken off neck vertebrae (15) from the remaining spine section of the bird without damaging the neck skin, whereby the pressure means (9) is stationary and is positioned at such a distance below the plane of the receiving opening (8) that the minimal distance occuring between an edge (14) of the receiving opening and the pressure means (9) is only sufficient for passing the neck skin of the bird whereas as a result of the combined action of the stationary pressure means and said edge of the receiving opening the neck vertebrae (15) are removed from the neck skin, wherein a guide (12) for positioning the neck of the bird into the receiving opening joins said rod section (10), characterized in that the rod section (10), for cooperating only with the rear edge (14), as seen in the direction of travel, of the receiving opening (8), mainly extends transversely to the direction of motion thereof.

2. Apparatus according to claim 1 or 2, characterized in that the outermost parts of the rod section (10) include an angle with the direction of travel, such that said outermost parts will intersect the rear edge of the opening before innermost parts will.

3. Apparatus according to claim 1 or 2, characterized in that the openings comprise V-shaped recesses (8) at the circumference of a rotating plate (7) of which the circumferential velocity substantially corresponds with the conveying velocity of the conveyor (5).

4. Apparatus according to claim 2 or 3, characterized in that the plate (7) is slightly bent down at its circumferential sections positioned between the recesses (8).

## Patentansprüche

1. Vorrichtung zum Entfernen der gebrochenen Halswirbel eines gerupften, geköpften Vogels, der mit seinen Beinen von einem Schäkel (4) eines Förderers (5) herunter hängt, mit wenigstens einer Öffnung (8) zum Aufnehmen des Halses des Vogels, wobei die Öffnung sich mit dem Förderer weiter bewegt, und einer einen Stababschnitt (10) umfassenden Aufspanneinrichtung (9), die sich relativ zu der Aufnahmeöffnung bewegt, wenn der Förderer sich weiter bewegt, um die gebrochenen Halswirbel (15) von dem verbleibenden Wirbelsäulenabschnitt des Vogels abzutrennen, ohne die Halshaut zu beschädigen, wobei die Aufspanneinrichtung (9) ortsfest und mit einer solchen Entfernung unterhalb der Ebene der Aufnahmeöffnung (8) angeordnet ist, daß der kleinste Abstand, der zwischen einer Kante (14) der Aufnahmeöffnung und der Aufspanneinrichtung (9) auftritt, gerade dazu ausreicht, die Halshaut des Vogels passieren zu lassen, während als ein Ergebnis der kombinierten Wirkung der ortsfesten Aufspanneinrichtung und der besagten Kante der Aufnahmeöffnung, die Halswirbel (15) von der Halshaut entfernt werden, wobei eine Führung (12) zum Anordnen des Halses des Vogels in der Aufnahmeöffnung sich an den Stababschnitt (10) anschließt,
dadurch **gekennzeichnet,**
daß der Stababschnitt (10) für ein ausschließliches Zusammenwirken mit der in der Laufrichtung gesehen hinteren Kante (14) der Aufnahmeöffnung (8) hauptsächlich quer zu deren Bewegung verläuft.

2. Vorrichtung nach Anspruch 1,
dadurch **gekennzeichnet,**
daß die am weitesten außen gelegenen Teile des Stababschnitts (10) einen Winkel mit der Laufrichtung derart einschließen, daß diese am weitesten außen gelegenen Teile die hintere Kante der Öffnung vor den am weitesten innen gelegenen Teilen schneiden.

3. Vorrichtung nach Anspruch 1 oder 2,
dadurch **gekennzeichnet,**
daß die Öffnungen V-förmige Ausnehmungen (8) am Umfang einer rotierenden Platte (7) umfassen, deren Umfangsgeschwindigkeit im wesentlichen der Fördergeschwindigkeit des Förderers (5) entspricht.

4. Vorrichtung nach Anspruch 2 und 3,
dadurch **gekennzeichnet,**
daß die Platte (7) an ihren zwischen den Ausnehmungen (8) angeordneten Umfangsabschnitten geringfügig nach unten gebogen ist.

## Revendications

1. Appareil pour enlever les vertèbres rompues du cou d'un oiseau décapité et plumé, suspendu par les pattes à un crochet (4) d'un convoyeur (5), comprenant au moins une ouverture (8) pour recevoir le cou de l'oiseau, ladite ouverture se déplaçant en même temps que le convoyeur, et des moyens de pression (9) comportant un élément de tige (10) qui se déplace par rapport à l'ouverture de réception lorsque le convoyeur se déplace, pour séparer les vertèbres rompues du cou (15) du reste de la colonne vertébrale de l'oiseau sans endommager la peau du cou, les moyens de pression (9) étant immobiles et placés à une distance, au-dessous du plan de l'ouverture de réception (8), telle que la distance minimale définie entre un bord (14) de l'ouverture de réception et les moyens de pression (9) est juste suffisante pour le passage de la peau du cou de l'oiseau de sorte que, comme résultat de l'action combinée des moyens de pression immobiles et dudit bord de l'ouverture de réception, les vertèbres du cou (15) sont extraites de la peau du cou, et un guide (12) pour positionner le cou de l'oiseau dans l'ouverture de réception se raccorde audit élément de tige (10),
caractérisé en ce que l'élément de tige (10), pour coopérer seulement avec le bord arrière (14), vu dans le sens du déplacement, de l'ouverture de réception (8), s'étend principalement transversalement à la direction de déplacement de celle-ci.

2. Appareil suivant la revendication 1,
caractérisé en ce que les parties les plus extérieures de l'élément de tige (10) forment un angle avec la direction de déplacement, de sorte que lesdites parties les plus extérieures rencontrent le bord arrière de l'ouverture avant que les parties les plus intérieures ne rencontrent ce bord.

3. Appareil suivant la revendication 1 ou 2, caractérisé en ce que les ouvertures comprennent des échancrures en forme de V (8) ménagées à la circonférence d'une plaque rotative (7) dont la vitesse circonférentielle correspond sensiblement à la vitesse de transport du convoyeur (5).

4. Appareil suivant la revendication 2 ou 3, caractérisé en ce que la plaque (7) est légèrement pliée vers le bas, dans ses parties circonférentielles situées entre les échancrures (8).
